# EUROPEAN PATENT SPECIFICATION

(11) **EP 2 737 872 B1**
(45) Date of publication and mention of the grant of the patent: **25.07.2018**
(21) Application number: 13194769.9
(22) Date of filing: 28.11.2013
(51) Int. Cl.: A61C 5/68

(54) **Dental container**
Dentaler Behälter
Récipient dentaire

(30) Priority: 30.11.2012 AU 2012905260
(43) Date of publication of application: 04.06.2014
(73) Proprietor: SDI Limited, Bayswater, VIC 3153 (AU)
(72) Inventor: Cheetham, Joshua James, Windsor, Victoria 3181 (AU)
(74) Representative: Minoja, Fabrizio

(56) References cited:
- DE-A1- 1 955 996
- US-A- 3 731 853
- US-A- 3 762 540
- US-A- 4 294 351
- US-A- 4 362 242
- US-A- 5 394 980
- US-A1- 2011 027 751
- US-A1- 2011 056 853

## Description

The present invention relates to a dental container.

It is known to hold dental materials in containers with separated components until required for use. Typically, at the time of use the components are contacted with one another and admixed to form a dental composition.

It has been found that known dental containers are difficult to use with relatively viscous dental materials. Examples of such dental containers are disclosed in documents US 3,762,540 A, US 2011/0056853 A, and US 2011/0027751 A1. The container of the present invention aims to overcome at least in part difficulties encountered with the use of relatively viscous dental materials in dental containers. The present inventions is according to claim 1 and further embodiments are according to dependent claims 2-4. The present invention will now be described, by way of example, with reference to the accompanying drawings, in which:
Figure 1 is a longitudinal sectional view of a container in accordance with the present invention in exploded condition;
Figure 2 is a view similar to Figure 1 showing the container in assembled condition;
Figure 3 is a view similar to Figure 2 showing the container in activated condition;
Figure 4 is a view similar to Figure 3 showing the container in separated condition after activation;
Figure 5 is a view similar to Figure 1 showing an alternative embodiment of the container of the present invention;
Figure 6 is a view similar to Figure 5 showing the container in assembled condition;
Figure 7 is a view similar to Figure 6 showing the container in activated condition; and
Figure 8 is a view similar to Figure 7 showing the container in separated condition after activation.

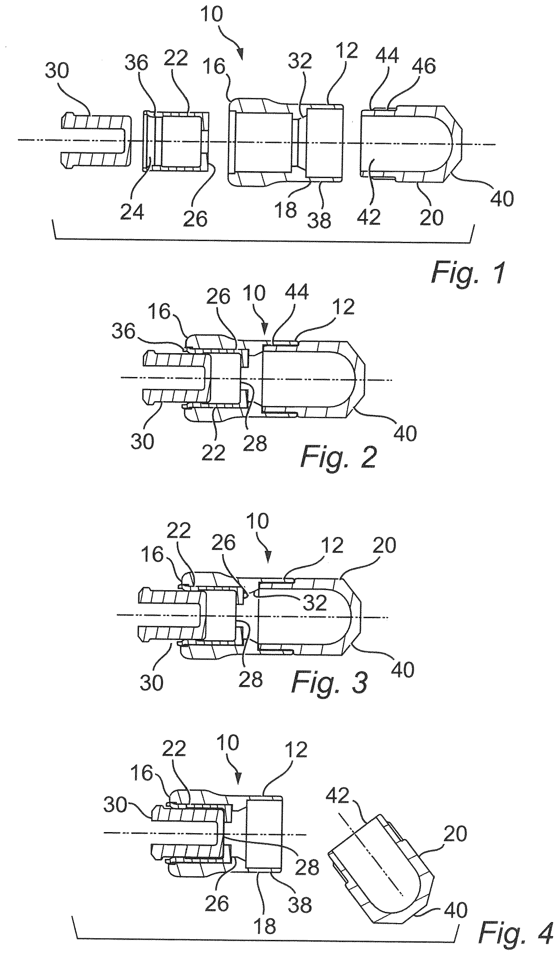

Referring to the Figures, there is shown in Figures 1 to 4 of the accompanying drawings, a dental container 10 having an outer central body 12. The outer central body 12 has a proximal end 16 and a distal end 18. A separable nose portion 20 is initially mounted to the distal end 18 of the body 12.

The proximal end 16 is arranged to receive snugly a liquid receptacle 22 having an open outer end 24 and a closed inner end formed by a wall 26. The wall 26 has a relevantly thin weakened central section 28 which is centrally disposed.

Further, the liquid receptacle 22 is arranged to receive at the open outer end 24 thereof a plunger 30 as shown in Figure 2.

Further the outer central body 12 has an intermediate annular ridge 32 which provides an internally projecting step 34 for engagement with the inner upper end of the liquid receptacle 22 as shown in Figure 2. Thus, the liquid receptacle 22 is prevented from travelling into the body 12 any further than the ridge 32. In addition the liquid receptacle 22 has an outwardly extending rear circumferential flange 36 which engages with a corresponding recess in the outer central body 12.

Further, it can be seen in Figure 1 that the distal end 18 of the outer central body 12 has a cylindrical portion 38 arranged to engage with the nose portion 20. The nose portion 20 has an outer wall having a closed outer end 40 and an open inner end 42. Further the wall of the nose portion 20 has a thinner inner portion 44 which engages snugly with the cylindrical portion 38 as shown in Figure 2 when the container 10 is assembled.

To ensure that the nose portion 20 is firmly engaged with the cylindrical portion 38 the distal end 18 is provided with a circumferential sealing means 46 as can best be seen in Figure 1.

In operation of the container 10, the liquid receptacle 22 containing liquid is engaged with the proximal end 16 as shown in Figure 2. Further, the plunger 30 is engaged with the open end 24 in the liquid receptacle 22 as shown in Figure 2. In this condition the plunger 30 is spaced from the wall 26 of the receptacle 22. Further, the nose portion 20 is engaged with the cylindrical portion 38 to complete the distal end 18 as shown in Figure 2.

The liquid receptacle 22 contains liquid between the plunger 30 and the wall 26. The distal end 18 contains solid powder material.

The plunger 30 is depressed to the position shown in Figure 3 and hydraulic pressure from the liquid causes the wall 26 to rupture at the weakened central portion 28. The plunger 30 then pushes the liquid through the ruptured wall 26 into the distal end 18 to contact solid powder contained in the distal end 18.

The container 10 is then placed in a suitable mixing device such as a vibrating mixer of known type. This causes the liquid and powder to become thoroughly admixed to form a paste. The bulk of the paste is contained in the nose portion 20. The nose portion 20 is then manually detached from the body 12 as shown in Figure 4. The paste can now be manually scooped out using a suitable dental tool for application to a tooth of a patient by the dentist as required.

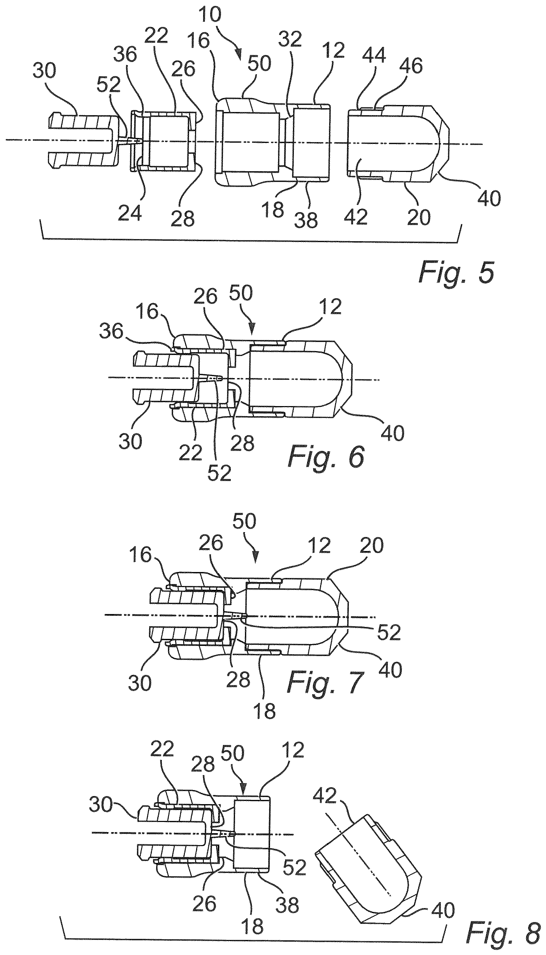

The container 50 shown in Figures 5 to 8 is similar to those shown in Figures 1 to 4 and like reference numbers denote like parts. However, in this embodiment of the present invention the plunger 30 is provided with a forwardly extending sharp projection 52. In this case the container operates in similar manner to the container of Figures 1 to 4 except that weakened portion 28 of the wall 26 is ruptured by being pierced by the projection 52 rather than by application of hydraulic pressure.

The arrangement of the container of the present invention avoids the need for extruding the paste through an outlet nozzle as is commonly done with less viscous materials.

Modifications and variations as would be apparent to a skilled addressee are deemed to be within the scope of the present invention.

## Claims

1. A dental container (10) arranged to contain a liquid and a solid powder material initially in separated condition, comprising an outer central body (12) having a proximal end (16) and a distal end (18), a liquid receptacle (22) having a closed inner end and an open outer end (24) mounted at the proximal end (16) of the outer central body (12) and a separable nose portion (20) mounted at the distal end (18) of the outer body (12) initially for mixing purposes but which is arranged to be manually separated from the remainder of the container (10) after mixing, a plunger (30) is mounted in the open outer end (24) of the liquid receptacle (22), the closed inner end of the liquid receptacle (22) being formed by a wall (26) having a weakened section (28), the distal end (18) of the outer central body (12) and the nose portion (20) being arranged to contain solid powder material, the arrangement being such that depression of the plunger (30) causes the wall (26) of the liquid receptacle (22) to be ruptured at the weakened section (28) so that the liquid and the solid powder material are contacted for mixing together to form a dental paste, the nose portion (20) having an outer wall with a closed outer end (40) and an open inner end (42), the outer central body (12) comprising an intermediate annular inwardly extending ridge (32) which provides an internally projecting step (34) for engagement with the inner end of the liquid receptacle (22) so that the liquid receptacle (22) is prevented from moving into the outer central body (12) any further than the ridge (32), **characterized in that** the nose portion (20) has a wall with a thinner inner portion (44) arranged to engage snugly within a cylindrical portion (38) of the distal end of the outer central body (12).

2. A dental container (10) according to claim 1 **characterized in that** the liquid receptacle (22) has an outwardly extending rear circumferential flange which engages with a corresponding inner recess in the outer central body (12).

3. A dental container (10) according to any one of the preceding claims **characterized in that** an inner end of the plunger (30) is substantially flat so that upon depression of the plunger liquid in the receptacle (22) applies hydraulic pressure to the weakened section (28) of the distal wall (26) of the liquid receptacle (22) to cause the wall (26) to rupture so that the liquid can contact the solid powder material.

4. A dental container (10) according to any one of the claims 1 to 2, **characterized in that** an inner end of the plunger (30) has a forwardly extending sharp projection arranged to pierce the weakened portion (28) of the distal wall (26) of the liquid receptacle (22) so that the liquid can contact the solid powder material.

## Patentansprüche

1. Dentalbehälter (10), der eingerichtet ist, eine Flüssigkeit und ein festes Pulvermaterial anfänglich in getrenntem Zustand zu enthalten, umfassend einen äußeren Mittelkörper (12) mit einem proximalen Ende (16) und einem distalen Ende (18), einen Flüssigkeitsbehälter (22) mit einem geschlossenen inneren Ende und einem an dem proximalen Ende (16) des äußeren Mittelkörpers (12) angebrachten offenen äußeren Ende (24), und einen abtrennbaren Vorderabschnitt (20), der an dem distalen Ende (18) des äußeren Körpers (12) zunächst zu Mischzwecken angebracht ist, der jedoch eingerichtet ist, nach dem Mischen manuell vom Rest des Behälters (10) abgetrennt zu werden, wobei ein Kolben (30) in dem offenen äußeren Ende (24) des Flüssigkeitsbehälters (22) angebracht ist, wobei das geschlossene innere Ende des Flüssigkeitsbehälters (22) durch eine Wand (26) mit einem geschwächten Abschnitt (28) gebildet ist, wobei das distale Ende (18) des äußeren Mittelkörpers (12) und der Vorderabschnitt (20) eingerichtet sind, um festes Pulvermaterial zu enthalten, wobei die Anordnung derart ist, dass ein Herunterdrücken des Kolbens (30) bewirkt, dass die Wand (26) des Flüssigkeitsbehälters (22) an dem geschwächten Abschnitt (28) gebrochen wird, so dass die Flüssigkeit und das feste Pulvermaterial miteinander in Kontakt gebracht werden, um eine Dental-Paste zu bilden, wobei der Vorderabschnitt (20) eine Außenwand mit einem geschlossenen äußeren Ende (40) und einem offenen inneren Ende (42) aufweist, wobei der äußere Mittelkörper (12) eine dazwischenliegende ringförmige sich nach innen ausdehnenden Kante (32) aufweist, die eine innen vorstehende Stufe (34) zum Eingriff mit dem inneren Ende des Flüssigkeitsbehälters (22) bereitstellt, so dass der Flüssigkeitsbehälter (22) daran gehindert wird, sich in den äußeren Mittelkörper (12) weiter als zur Kante (32) zu bewegen, **dadurch gekennzeichnet, dass** der Vorderabschnitt (20) eine Wand mit einem dünneren inneren Abschnitt (44) aufweist, der so eingerichtet ist, dass er eng in einen zylindrischen Abschnitt (38) des distalen Endes des äußeren Mittelkörpers (12) eingreift.

2. Dentalbehälter (10) nach Anspruch 1, **dadurch gekennzeichnet, dass** der Flüssigkeitsbehälter (22) einen sich nach außen erstreckenden hinteren Umfangsflansch aufweist, der in eine entsprechende innere Vertiefung im äußeren Mittelkörper (12) eingreift.

3. Dentalbehälter (10) nach einem der vorhergehenden Ansprüche, **dadurch gekennzeichnet, dass** ein inneres Ende des Kolbens (30) im Wesentlichen flach ist, so dass beim Herabdrücken des Kolbens Flüssigkeit in dem Behälter (22) hydraulischen Druck auf den geschwächten Abschnitt (28) der distalen Wand (26) des Flüssigkeitsbehälters (22) ausübt, damit die Wand (26) reißt, so dass die Flüssigkeit das feste Pulvermaterial berühren kann.

4. Dentalbehälter (10) nach einem der Ansprüche 1 bis 2, **dadurch gekennzeichnet, dass** ein inneres Ende des Kolbens (30) einen sich nach vorne erstreckenden scharfen Vorsprung aufweist, der eingerichtet ist, um den geschwächten Abschnitt (28) der distalen Wand (26) des Flüssigkeitsbehälters (22) zu durchbohren, so dass die Flüssigkeit das feste Pulvermaterial berühren kann.

## Revendications

1. Contenant dentaire (10) agencé de manière à contenir un liquide et un matériau en poudre solide se trouvant initialement dans un état séparé, comprenant un corps central extérieur (12) présentant une extrémité proximale (16) et une extrémité distale (18), un réceptacle à liquide (22) présentant une extrémité intérieure fermée et une extrémité extérieure ouverte (24) et monté au niveau de l'extrémité proximale (16) du corps central extérieur (12) et une partie nez (20) séparable montée au niveau de l'extrémité distale (18) du corps extérieur (12) initialement à des fins de mélange mais qui est agencée de manière à être séparée manuellement du restant du contenant (10) après mélange, un piston (30) est monté dans l'extrémité extérieure ouverte (24) du réceptacle à liquide (22), l'extrémité intérieure fermée du réceptacle à liquide (22) étant formée d'un mur (26) présentant une section affaiblie (28), l'extrémité distale (18) du corps central extérieur (12) et la partie nez (20) étant agencées de manière à contenir un matériau en poudre solide, ledit agencement étant tel qu'un enfoncement du piston (30) provoque une rupture de la paroi (26) du réceptacle à liquide (22) au niveau de la section affaiblie (28) de sorte que le liquide et le matériau en poudre solide sont mis en contact afin d'être mélangés ensemble de manière à former une pâte dentaire, la partie nez (20) présentant une paroi extérieure munie d'une extrémité extérieure fermée (40) et d'une extrémité intérieure ouverte (42), le corps central extérieur (12) comprenant une crête annulaire intermédiaire (32) s'étendant vers l'intérieur, qui fournit une marche (34) faisant saillie de manière interne et permettant une mise en prise avec l'extrémité intérieure du réceptacle à liquide (22) de sorte que le réceptacle à liquide (22) est dans l'impossibilité de se déplacer jusque dans le corps central extérieur (12) au-delà de la crête (32), **caractérisé en ce que** la partie nez (20) présente une paroi munie d'une partie intérieure (44) plus fine agencée de manière à venir confortablement en prise au sein d'une partie cylindrique (38) de l'extrémité distale du corps central extérieur (12).

2. Contenant dentaire (10) selon la revendication 1, **caractérisé en ce que** le réceptacle à liquide (22) présente une bride circonférentielle arrière, s'étendant vers l'extérieur, qui vient en prise avec un renfoncement intérieur correspondant du corps central extérieur (12).

3. Contenant dentaire (10) selon l'une quelconque des revendications précédentes, **caractérisé en ce qu'**une extrémité intérieure du piston (30) est essentiellement plate, de sorte qu'un enfoncement du piston au sein du réceptacle (22) applique une pression hydraulique à la section affaiblie (28) de la paroi distale (26) du réceptacle à liquide (22), ce qui provoque la rupture de la paroi (26) de sorte qu'un liquide peut venir en contact avec le matériau en poudre solide.

4. Contenant dentaire (10) selon la revendication 1 ou 2, **caractérisé en ce qu'**une extrémité intérieure du piston (30) présente une saillie pointue s'étendant vers l'avant et agencée de manière à percer la partie affaiblie (28) de la paroi distale (26) du réceptacle à liquide (22) de sorte que le liquide peut venir en contact avec le matériau en poudre solide.
